# EUROPEAN PATENT APPLICATION

(11) **EP 3 315 809 A1**
(43) Date of publication of application: **02.05.2018**
(21) Application number: 16425099.5
(22) Date of filing: 25.10.2016
(51) Int. Cl.: F16D 3/38

(54) **DEVICE SUITABLE FOR ELIMINATING THE AXIAL AND RADIAL PLAY IN A CONNECTION BETWEEN A SHAFT AND A MECHANICAL TRANSMISSION HUB**

(71) Applicant: Benzi & Di Terlizzi s.r.l., 20065 Inzago (MI) (IT)
(72) Inventor: Benzi, Vito Carlo, I - 20065 Inzagi (Mi) (IT)
(74) Representative: Ferraiolo, Ruggero

(57) **Abstract**

In a transverse hole (2) of a yoke (Y) a shaped pin (3) is received that has a threaded axial cavity (5) in which a traction screw (6) suitable for dragging the shaped pin (3) is screwed to clamp the yoke hub (1) on a power take off (4) by engaging the shaped pin (3) on the surface of the groove (8) of a tooth (9) in the power take off (4), the vertical median plane (B-B) of the longitudinal hole in the hub (1) being angularly spaced of a negative angle (α) with respect to the median plane (A-A) of the tooth (9)).

## Description

### Field of the invention.

The invention lies in the field of mechanical power transmission systems, in particular of a power transmission between a tractor and an agricultural machine.

### State of the art.

In this field of technique there are several devices that use a cardan transmission where a pin in tangential position with respect to the axis of a power take off (PTO in the following) is in sliding condition into a hole of a hub to be forced into the groove of the PTO tooth to tighten the hub on the PTO itself. The Italian patent N ° 1,198,976 shows a shaped pin which can be forced into a groove of a PTO when the pin is moved axially by a maneuvering nut, along a seat formed in the hub.

### Drawbacks in the prior art.

The main drawback in the known devices is that the shaped pin is forced against a sharp edge of said groove so that, if the clamping force is even slightly higher than the recommended value, the pin is deformed in the section in contact with the groove and it can not be reused in subsequent assembling steps.

### Background of the invention.

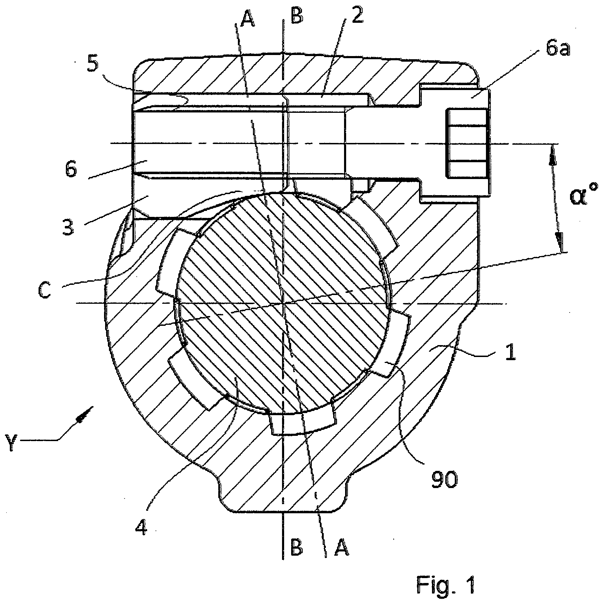

Whereas
- the term - shaped pin - is intended as a pin with a section varying from a maximum diameter at the distal end to a minimum diameter at the proximal end, designed so that a bottom part thereof engages in sliding condition the surface of a tooth groove in the PTO.
- the PTO has a splined section provided with a variable number of teeth, suitable for coupling with corresponding recesses formed in the hub of a yoke,
- the term - hub.- is intended as the hub of a yoke or of other mechanical connection means,
   the invented device includes:
   - a transverse hole in the yoke hub in which hole a shaped pin is received in sliding condition, the pin wall facing the PTO engaging in the groove of a tooth;
   - a longitudinal hole in the hub in which the recesses that receive the teeth of the PTO are in a position such that the tooth of the PTO in contact with the shaped pin has its longitudinal median plane spaced of a negative angle with respect to the vertical median plane of the yoke. To achieve the advantages set forth below, the negative angle varies between 5° and 15°, the negative angle being intended that viewed in Fig. 1,
   - a threaded axial cavity in the shaped pin;
   - a traction screw screwed into the pin threaded cavity suitable to drag the shaped pin to cause the desired clamping of the hub on the PTO by the contact between the shaped pin and the surface of a groove,
   - as an alternative to the traction screw, the shaped pin bears a longitudinal screw thread into its proximal portion on which thread a nut is screwed that drags. the pin in engagement with the PTO and, when necessary, to release the shaped pin from the engagement with the PTO.
   - in particular, the shaped pin arched segment in contact with the PTO realizes a contact between the shaped pin and the surface of a groove of the PTO that eliminates the interference of the pin with the sharp edges of said groove and, consequently, any possible permanent deformation in the shaped pin. A tightening torque properly metered when screwing the traction screw in the hole of the shaped pin ensures a power transmission without axial and radial play.

### Advantages of the invention.

- The advantages of the invention are the following:
   a). The device is free from protrusions that may cause entanglement, the head of the pin, in particular, remaining inside the hub dimensions in the yoke, the requirement of UNI EN 12965 for CE marking of the cardan transmission.
   b) The assembly and disassembly of the drive shaft provided with the shaped pin device does not entail the separation of the different parts, so reducing the risk of loss of elements and the assembly being more maneuverable and equipped with remarkable ergonomics, appreciable in the confined spaces where generally the mounting of the cardan transmission is effected.
   - c) The elimination of the axial and radial play entails a reduction of the impacts between the different parts in the device and a consequent reduction of vibrations, which results in a greater useful life of all parts connected to the cardan transmission and the cardan transmission itself.
   - d). Also in case of excess of the clamping force the device as a whole suffers less damages compared to those of conventional devices and can also be reused after a number of mounting and dismounting cycles, showing a high margin of safety.

### Detailed description of the invention.

- The invention will now be described more in detail with an example of embodiment and the help of the drawing in which:
   - Fig. 1 is a first cross section, the
   - Fig. 2 is a perspective view, the
   - Fig. 3 is a longitudinal view, the
   - Fig. 3a is a section along B-B of Fig. 3 and the
   - Fig. 4 is a second cross section.

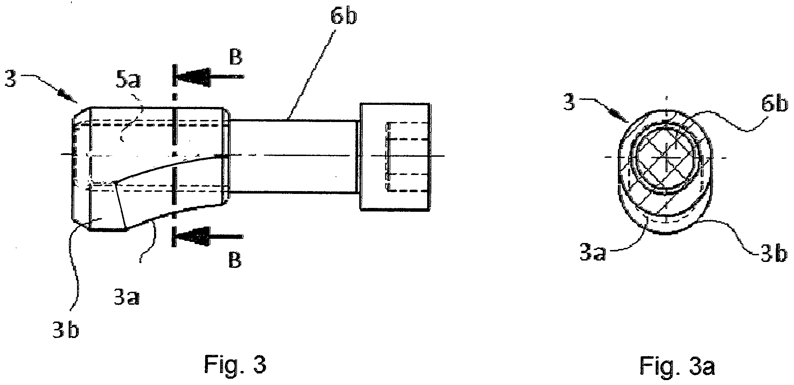

- Fig. 1 shows the shaped pin 3 with a distal cylindrical surface coupling with and sliding into a transverse hole 2 and shows a threaded axial hole 5 adapted to receive a traction socket head screw 6 whose head 6a is substantially contained within the perimeter of the device. By means of the applied clamping action through the socket head screw 6 the shaped pin 3 is dragged along the transverse hole 2 up to realize in a point C a clamping contact between its lower surface (3a in Fig. 3) and the toroidal groove 8 formed on a tooth, not visible in the figure, of the shaft 4 where the vertical median plane B-B of the yoke and the median plane A-A of the tooth are angularly spaced by a negative angle α ranging from 5° to 15°. The recesses receiving the teeth of the shaft 4 are shown by 90.

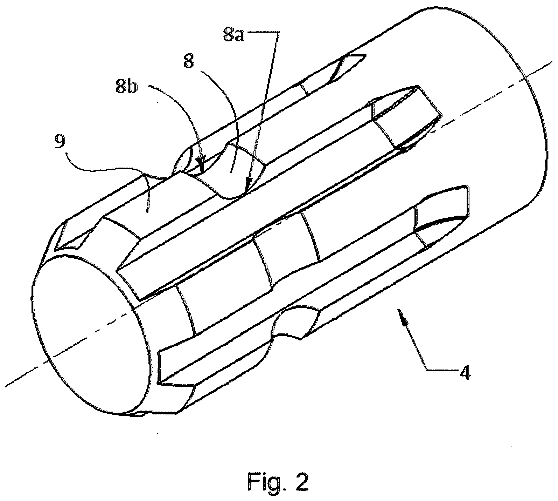

- Fig. 2 shows the splined drive shaft 4 with its teeth 9 and with a toroidal groove 8 in which the lower surface 3a of the shaped pin 3, not shown in the figure, will engage. The contact between the sharp edges 8a of the groove 8 and the shaped pin 3 is avoided.
- Fig. 3 shows a shaped pin 3 with the threaded axial hole 5a partially occupied by the traction socket head screw 6b. The bottom part 3a suitable for engaging in the groove of a PTO tooth and the distal cylindrical portion 3b suitable to slide in the hole 2 are visible.
- Fig. 3a shows the parts 3, 3a, 3b and 6b described in Fig. 3.

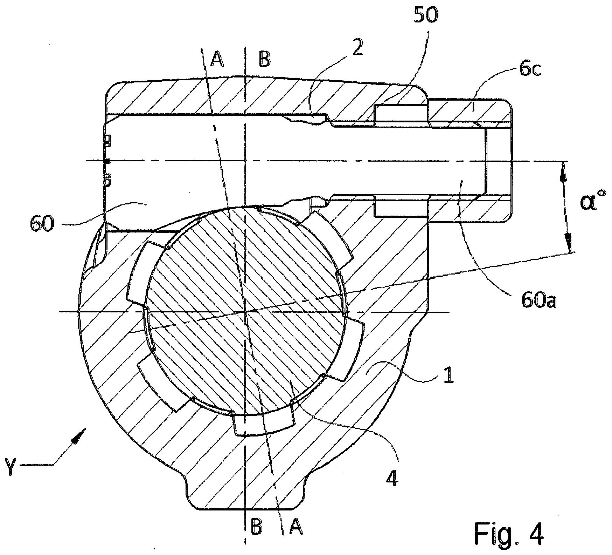

- Fig. 4 shows how the hub 1 of a yoke Y has a transverse hole 2 in which a shaped pin 60 is housed which bears on the proximal end 60a a longitudinal screw thread 50 on which a nut 6c is screwed that clamps the hub 1 on the shaft 4, also in this solution the condition of the angle α between the plane A - A of the tooth and the plane B - B of the yoke is respected.

## Claims

1. Device for eliminating the axial and radial play in a connection between a hub (1) and a power take off (4) in a mechanical transmission in which the hub (1) has a transverse hole (2) that receives in sliding condition a clamping pin (3) **characterized in that** are comprised:
- the transverse hole (2) in the hub (1) of a yoke (Y) in which hole a shaped pin (3) is received in sliding condition, the lower surface (3a) of the sliding pin that faces the power take off (4) engaging in a groove (8) of a power take off tooth (9);
- a longitudinal hole in the hub (1) whose vertical median plane (B-B) is angularly spaced of a negative angle (α) with respect to the median plane (A-A) of the tooth (9),
- a threaded axial cavity (5) in the shaped pin (3);
- a traction screw (6) screwed into said threaded axial cavity (5) suitable for dragging the shaped pin (3) to create the desired clamping of the hub (1) on the power take off (4) through a contact between the shaped pin (3) and the surface of a groove (8).

2. Device according to claim 1 **characterized in that** the negative angle (α) ranges from 5° to 15°.

3. Device according to claims 1, 2 **characterized in that** the head (6a) of the traction screw (6) is substantially contained within the perimeter of the device.

4. Device according to claim 1 **characterized in that** the shaped pin (60) is provided with a longitudinal thread (50) into its proximal portion on which thread a nut (6c) is screwed that drags the shaped pin (60) in engagement with the power take off (4).

## Amended claims

### Amended claims in accordance with Rule 137(2) EPC.

1. Device for eliminating the axial and radial play in a connection between a hub (1) and a power take off (4) in a mechanical transmission in which the hub (1) has a transverse hole (2) that receives in sliding condition a shaped pin (3) suitable for engaging in a groove (8) of a tooth (9) of the power take off (4) positioned in the longitudinal hole of the hub (1) **characterized in that** the hub recess (90) and the tooth (9) received therein and engaging in the groove (8) have their longitudinal median plane (A-A) spaced of a negative angle ranging from 5° to 15° with respect to the median plane (B-B) of the hub (1),
- a threaded axial cavity (5) is made in the shaped pin (3),
- a traction screw (6) is screwed into said threaded axial cavity (5) suitable for dragging the shaped pin (3) to cause the desired clamping of the hub (1) on the power take off (4).

2. Device according to claim 1 **characterized in that** the shaped pin (60) is provided with a longitudinal thread (50) into its proximal portion on which thread a nut (6c) is screwed that drags the shaped pin (60) in engagement with the power take off (4).

3. Device according to claims 1, 2 **characterized in that** the head (6a) of the traction screw (6) is substantially contained within the perimeter of the device.
